Europäisches Patentamt

(19) European Patent Office

Office européen des brevets

(11) Publication number : **0 365 877 B1**

# (12) EUROPEAN PATENT SPECIFICATION

(45) Date of publication of patent specification :
**11.01.95 Bulletin 95/02**

(51) Int. Cl.[6] : **H01B 3/30**

(21) Application number : **89118324.6**

(22) Date of filing : **03.10.89**

(54) **Polyamideimide insulated wire.**

(30) Priority : **04.10.88 JP 251558/88**
**17.05.89 JP 125396/89**
**17.05.89 JP 125397/89**

(43) Date of publication of application :
**02.05.90 Bulletin 90/18**

(45) Publication of the grant of the patent :
**11.01.95 Bulletin 95/02**

(84) Designated Contracting States :
**DE FR GB NL**

(56) References cited :
**EP-A- 0 226 968**
**DE-A- 3 034 536**
**FR-A- 2 179 131**
**GB-A- 2 104 084**
**DATABASE WPIL, accession no. 81-61320D,**
**Derwent Publications Ltd, London, GB; &**
**JP-A-56 082 857**
**DATABASE WPIL, accession no. 87-232013,**
**Derwent Publications Ltd, London, GB; &**
**JP-A-62 156 122**

(73) Proprietor : **SUMITOMO ELECTRIC**
**INDUSTRIES, LTD.**
**5-33, Kitahama 4-chome,**
**Chuo-ku**
**Osaka-shi, Osaka 541 (JP)**

(72) Inventor : **Ueoka, Isao c/o Osaka Works of**
**Sumitomo**
**Electric Industries, Ltd.**
**1-3, Shimaya 1-chome**
**Konohana-ku Osaka (JP)**
Inventor : **Yamamoto, Teruyuki c/o Osaka**
**Works of Sumitomo**
**Electric Industries, Ltd.**
**1-3, Shimaya 1-chome**
**Konohana-ku Osaka (JP)**

(74) Representative : **Patentanwälte Grünecker,**
**Kinkeldey, Stockmair & Partner**
**Maximilianstrasse 58**
**D-80538 München (DE)**

## Description

The present invention relates to an insulated wire which exhibits excellent solderability as well as high thermal resistance.

Polyurethane-insulated wires are widely used for wiring and coils in electronic equipment because of their inherent solderability without exfoliation of the insulating film.

Recently, while increased miniaturization and performance of electronic apparatuses has resulted, increased thermal resistance in electronic components has been demanded because of high temperatures at which the electronic apparatuses are used.

Conventional polyurethane-insulated wires cannot meet the recent requirements for thermal resistance in some applications. In such applications, attempts have been made to use polyester-insulated wires and esterimide-insulated wires.

The polyester-insulated wires or the ester-imide-insulated wires, however, are not solderable, although these wires satisfy the requirement for thermal resistance. As a result, users of these wires are compelled to choose thermal resistance or the easiness of end treatment (solderability). Therefore, an insulated wire having both thermal resistance and solderability has been demanded.

JP-A-62156122 discloses a heat resistant resin composition comprising polyamideimide resin obtained from the reaction between a tribasic acid anhydride and an aromatic diisocyanate in a polar solvent and an aromatic diisocyanate blocked by lactams or trimers.

EP-A-0226968 discloses a process for the production of polyamideimide lacquers by reacting tricarboxylic anhydride with polyisocyanate having at least two isocyanate groups whereby blocked polyisocyanate is added to the reaction mixture before, during or after the reaction.

The object of the present invention is to provide an insulated wire which has both excellent solderability and high thermal resistance.

This object has been accomplished by providing an insulated wire comprising a conductor coated and baked thereon with an insulating lacquer, the insulating lacquer comprising (a) 100 parts by weight of a polyamideimide resin having a molecular weight corresponding to a reduced specific viscosity of from 0.1 to 1.0 measured at a concentration of the polyamideimide resin of 0.5 g in 100 ml dimethylacetamide or N-methyl-2-pyrrolidone as the solvent, at a temperature of 30°C, and (b) 75 to 400 parts by weight of a blocked polyisocyanate compound derived from diphenylmethane-diisocyanate.

The present invention achieves an insulated wire with the high thermal resistance of polyimide resin that is solderable, by incorporating an appropriate amount of a blocked polyisocyanate in polyamideimide resin.

Polyamideimide resins have previously been considered incapable of having solderability without impairing the thermal resistance even with the addition of a blocked polyisocyanate. This is because the polyamideimide resin has high thermal resistance, and further it does not have a hydroxyl group that can react with the blocked polyisocyanate to form urethane linkage that provides solderability.

The inventors of the present invention have achieved solderability with polyamideimide resin without impairing its thermal resistance by controlling the blending ratio and the type of the blocked polyisocyanate blended to the polyamideimide resin.

The polyamideimide resin in the present invention is a polymer having both amide linkage and imide linkage in the molecule. It is prepared typically in two methods as below.

In one typical preparation method, at least one tricarboxylic anhydride chloride is reacted with at least one diamine. A portion of the tricarboxlylic anhydride chloride may be replaced by at least one dicarboxylic dichloride, at least one tetacarboxylic dianhydride, or at least one dicarboxylic dichloride with at least one tetracarboxylic dianhydride.

A portion of the diamine may be replaced by at least one triamine, at least one tetramine, or at least one triamine with at least one tetramine.

Examples of the tricarboxylic anhydride chloride include a 4-acid chloride of trimellitic anhydride.

Examples of the dicarboxylic dichlorides include terephthalic dichloride, isophthalic dichloride, adipic dichloride.

Examples of the diamines include 4,4'-diaminodiphenylmethane, 4,4'-diaminodiphenyl ether, m-phenylene diamine. Examples of the triamines include 3,4,4'-triaminodiphenyl ether. Examples of the tetramines include 3,3'4,4'-tetraaminodiphenyl ether.

In another typical preparation method, at least one tricarboxylic anhydride is reacted with at least one diisocyanate. A portion of the tricarboxylic anhydride may be replaced by at least one dicarboxylic acid, at least one tetracarboxylic dianhydride, or at least one dicarboxylic acid with at least one tetracarboxylic anhydride.

Additionally, a portion of the isocyanate may be replaced by at least one trifunctional or higher functional polyisocyanate.

Examples of the tricarboxylic anhydrides include trimellitic anhydride.

Examples of the dicarboxylic acids include isophthalic acid, terephthalic acid, adipic acid.

Examples of the tetracarboxylic dianhydrides include pyromellitic dianhydride, benzophenonetetracarboxylic acid dianhydride. Examples of the diisocyanates include diphenylmethane-4,4'-diisocyanate, diphenyl ether-4,4'-diisocyanate, tolylene diisocyanate, xylylene diisocyanate, hexamethylene diisocyanate.

Examples of the polyisocyanates include polymethylene-polyphenylene polyisocyanate.

Polyamideimide resins derived from the reaction of an aromatic tricarboxylic anhydride or its derivative with an aromatic diisocyanate are preferable because of better manifestation of thermal resistance.

In the present invention, the polyamideimide resins have a molecular weight corresponding to a reduced specific viscosity of from 0.1 to 1.0. With the molecular weight of the resin corresponding to less than 0.1 in terms of the reduced specific viscosity, the resultant insulated wire has poor flexibility. With a molecular weight corresponding to more than 1.0, the productivity of the wire is lower because of excessive foaming of the film during the production of the insulated wires. The polyamideimide resins having a reduced specific viscosity of from 0.2 to 0.5 result in insulated wires having excellent characteristics that are easily produced.

In particular, resins having a reduced specific viscosity of about 0.3 are most preferred for providing the desired characteristics and operability.

The reduced specific viscosity in the present invention was measured at a concentration of 0.5 g of the polyamideimide resin in 100 ml of DMAC (dimethylacetamide) or $NM_2P$ (N-methyl-2-pyrrolidone) as the solvent, at a temperature of 30°C.

The blocked polyisocyanate derived from diphenylmethane diisocyanate used in the present invention may be any blocked compound prepared by blocking isocyanate groups of diphenylmethane diisocyanate singly, or of polyisocyanate derived from reacting diphenylmethane diisocyanate with a polyol, a polyamine, a polycarboxylic acid or the like, with a known blocking agent such as a phenol, an alcohol, a caprolactam.

Specific examples of blocked polyisocyanate with blacked group are Coronate 2503 (made by Nippon Polyurethane Co., Ltd.) which is prepared by blocking with a phenol a polyisocyanate derived from diphenylmethane diisocyanate and a polyol; and Millionate MS-50 (made by Nippon Polyurethane Co., Ltd.) prepared by blocking with a phenol a diphenylmethane diisocyanate.

In the present invention, the intended effect can be achieved only by use of the blocked polyisocyanate derived from diphenylmethane diisocyanate.

For instance, it was found by the present inventors that use of a blocked polyisocyanate derived from a polyol and tolylene diisocyanate will provide an insulating film poor in flexibility in spite of its high solderability; and use of a blocked polyisocyanate derived from a trimer of tolylene diisocyanate and containing isocyanuric ring will not provide satisfactory solderability in spite of its high flexibility.

In the present invention, the blocked polyisocyanate compound derived from diphenylmethane diisocyanate is added in an amount of from 75 to 400 parts by weight, preferably from 100 to 300 parts by weight, to 100 parts by weight of the polyamideimide resin. Less than 75 parts by weight of the compound will not provide solderability to the resultant insulated wire, while more than 400 parts by weight of the compound will provide less improvement of the thermal resistance of the resulting insulated wire and little flexibility of the insulating film.

The blending of an epoxy resin to the insulating film of the present invention will preferably improve the thermal softening properties and the crazing resistance of the insulated without impairing the solderability of the insulated wire. Other crosslinking agents are not preferred because use of a melamine resin does not provide any change in characteristics, and use of a phenol resin or an aliphatic polyimide resin raises the soldering temperature even though it improves these characteristics.

Examples of the useful epoxy resins include epoxides derived from bisphenols (such as bisphenol A, bisphenol F, bisphenol S, bisphenolbiphenyl, bisphenolnaphthalene, hydroquinone, resorcin, and catechol); epoxides derived from alcohols (such as ethylene glycol, propylene glycol, diethylene glycol, polyethylene glycol, butylene glycol, hexamethylene glycol, glycerin, trimethylolpropane, and trishydroxyisocyanuric acid); epoxides derived from amines (such as from hexamethylenediamine, ethylenediamine, phenylenediamine, diaminodiphenylmethane, diaminodiphenylsulfone, diaminodiphenyllpropane, naphthalenediamine, xylylenediamine, and isophoronediamine); epoxides derived from acids or acid anhydrides (such as fromadipic acid, sebacic acid, dodecanedioic acid, terephthalic acid, isophthalic acid, trimellitic acid, butane tetracarboxylic acid, pyromellitic acid, benzophenone tetracarboxylic acid, and isocyanuric acid; epoxides derived from isocyanates such as diphenylmethane diisocyanate, tolylene diisocyanate, hexamethalene diisocyanate, xylene diisocyanate, and naphthalele diisocyanate); epoxides derived from compounds having in the molecule a plural kinds of functional groups (such as from amino, alcoholic, phenolic, isocyanato groups, for example, ethanolamine, aminocaproic acid, hydorxybenzoic acid, aminophenol, and glycine).

Further, oligomers and polymers may be used which are derived by reacting the above epoxides with alcohols, phenols, acids, amines, or isocyanates.

Specific examples of the epoxy oligomers include Epikote #1001, #1004, #1007, and #1009 (made by Yuka Shell Epoxy Co., Ltd.) derived from bisphenol A and epichlorohydrin; and epoxy polymers such as Phenoxy PKHH (made by Union Carbide Corp.), and YP-50 (made by Thoto Kasei Co., Ltd.).

Among the epoxy resins, those having a bromine-substituted benzene ring in the molecules are preferable because of lower soldering temperature.

The use of a polymer derived from a reaction of an epoxy resin with an alcohol, a phenol, an acid, an amine, or an isocyanate is preferable because of the improved crazing resistance.

Preferable solvents for the insulating lacquer of the present invention are combinations of a solvent for the polyamideimide resin such as $NM_2P$, DMAC, and DMF (dimethylformamide) with a diluent such as solvent naphtha, toluene, and xylene. However, a solvent used usually for baking lacquer may be used or partially used: such solvents include phenols, glycols, glycol ethers such as cellosolve, phenyl cellosolve, methyl cellosolve, glycosolve, methyl glycosolve, phenyl glycosolve, and cellosolve acetate; cyclohexanone, methy ethyl ketone, ethyl acetate, tetrahydrofuran, nitrobenzene, dioxane, furfral, sulforane, DMSO (dimethylsulfoxide), pyridine, aniline, diethyl carbonate, ethanol, methanol, butanol, and cyclohexanol.

In the insulating lacquer of the present invention, a metal salt of naphthenic acid or octenoic acid, or an amine (such as an alkyl amine or an imidazole) is preferably used as a curing catalyst if desired.

The addition of the above catalyst in an appropriate amount is preferable for ease of production and higher thermal resistance.

Additionally, to the insulating lacquer of the present invention, there may be added, within a range not to impair the characteristics of the invention, a thermoplastic resin such as a polyvinyl formal, a polyamide, am polyester, a polyurethane, a polyether, a polysulfone, a polyether-sulfone, and a polyether-imide; a thermosetting resin such as a melamine resin, a phenol resin, a polyester, a polyurethane, a polyester-imide, a polyamide-imide not mentioned above, a polyester-amideimide, a polyimide, and hydantoin; a filler, a pigment, a dye, a surfactant, a lubricant, or an antioxidant.

The examples below are intended to illustrate the characteristics and advantages of the present invention. The Reference example below describes the insulating lacquer used in Comparative examples and Examples.

Reference Example 1 (Polyamideimide insulating lacquer):

192.1 g (1.0 mole) of trimellitic anhydride and 250.3 g (1.0 mole) of diphenylmethane-4,4'-diisocyanate were added to a mixed solvent consisting of 770 g of N-methyl-2-pyrrolidone and 330 g of solvent naphtha (Swazol #1000 supplied by Maruzen Petro-Chemical Co, Ltd.). The mixture was at 80°C for 3 hours. Thereafter, the temperature was raised to 165°C over 6 hours, and further reacted at this temperature for 2 hours to give a polyamide-imide insulating lacquer. The reduced specific viscosity was 0.51 to 0.54.

Reference Example 2 (polyamideimide insulating lacquer):

A polyamide-imide insulating lacquer was prepared in the same manner as in Reference example 1 except that the reaction was conducted at 80°C for 3 hours, at rising temperature to 140°C over 4 hours, and further reacted at 140°C for 3 hours. The reduced specific viscosity was 0.38.

Comparative Example 1:

A general-purpose polyurethane lacquer (TPU 5155, made by Totoku Paint Co, Ltd.) was applied to a copper conductive wire having a diameter of 0.3 mm so as to give a film thickness of 0.020 mm, and was subjected to baking. Table 1 shows the general characteristics (structure, flexibility, and solderability) of the resulting polyurethane-insulated wire and the glass transition temperature of the insulating film.

Comparative Example 2:

A heat-resistant polyurethane lacquer (ATH-605, made by Auto Chemical Co, Ltd.) was used for preparation of an insulated wire and the characteristics were evaluated in the same manner as in Comparative Example 1. The results are shown in Table 1.

Example 1:

An insulating lacquer was prepared by mixing and dissolving 100 parts by weight of the resin content of the polyamideimide insulating lacquer of Reference example 1 with 200 parts by weight of Coronate 2503 made by Nippon Polyurethane Co., Ltd. (hereinafter simply referred to as Coronate 2503, a blocked polyisocyanate derived from a polyol and diphenylmethane diisocyanate). An insulated wire was prepared with this insulating lacquer, and the characteristic thereof were measured in the same manner as in Comparative Example 1. The results are shown in Table 1.

Examples 2 and 3:

Insulated wires were prepared and the characteristics thereof were measured in the same manner as in Example 1 except that the added amounts of Coronate 2503 were 100 parts by weight (in Example 2) and 300 parts by weight (in Example 3) relative to the 100 parts by weight of the resin content of the polyamide-imide insulating lacquer. The results are shown in Table 1.

Comparative Examples 3 and 4:

Insulated wires were prepared and the characteristics thereof were measured in the same manner as in Example 1 except that the added amounts of Coronate 2503 were 50 parts by weight (Comparative Example 3) and 500 parts by weight (Comparative Example 4) relative to the 100 parts by weight of the resin content of the polyamide-imide insulating lacquer. The results are shown in Table 1.

Example 4, and Comparative Examples 5 and 6:

Insulated wires were prepared and the characteristics thereof were measured in the same manner as in Example 1 except that, in place of Coronate 2503, Millionate MS-50 (a blocked polyisocyanate derived from diphenylmethane diisocyanate) was used in Example 4; Desmodur Ap Stable (a blocked isocyanate derived from a polyol and tolylene diisocyanate, made by Sumitomo Bayer Urethane Co., Ltd.) was used in Comparative example 5); and Desmodur CT Stable (a blocked isocyanate comprising isocyanuric ring, made by Sumitomo Bayer Urethane Co., Ltd.) was used in Comparative example 6. The results are shown in Table 1.

Examples 5 and 6:

Insulating lacquers were prepared by mixing and dissolving 100 parts by weight of the polyamideimide resin prepared in Reference Example 2, 150 parts by weight (in Example 5) or 300 parts by weight (in Example 6) of Coronate 2503, and 1 part by weight of dibytyltin laurate. The insulating lacquer was applied and baked on a copper conductive wire having a diameter of 0.3 mm so as to give a film thickness of 0.020 mm. The general characteristics of the resulting insulated wires are shown in Table 2. (For the purpose of comparison of the characteristics, the characteristics of the polyurethane-insulated wires of Comparative Example 1 and 2 are shown in Table 2.)

Examples 7 to 12:

Insulating lacquers were prepared in a manner similar to Examples 5 and 6 by mixing and dissolving 100 parts by weight of the polyamideimide resin prepared in Reference example 2, 150 parts by weight of Coronate 2503, 20 parts by weight of the material shown below for each Example, and 1 part by weight of dibutyltin laurate as the catalyst. Insulated wires were obtained in the same manner as in Examples 5 and 6.
Example 7: Epikote #828
(an epoxy resin supplied by Yuka Shell Epoxy Co., Ltd.)
Example 8: TEPIC
(an epoxy resin supplied by Nissan Chemical Industries, Ltd.)
Example 9: PR-311
(a phenol resin supplied by Sumitomo Durez Co., Ltd.)
Example 10: Superbeckamine J-820
(a melamine resin supplied by Dainippon Ink and Chemicals, Inc.)
Example 11: Kelimide 600A
(an aliphatic polyimide supplied by Nippon Polyimide Co., Ltd.)
Example 12: YPBB25AS11
(a bromine modified phenoxy resin supplied by Thoto Kasei Co., Ltd.)
The general characteristics of the resultant insulating lacquers are shown in Table 3.

<u>Table 1</u>

| | | Comparative example | | Example | | | Comparative example | | Example | Comparative example | |
| --- | --- | --- | --- | --- | --- | --- | --- | --- | --- | --- | --- |
| | | 1 | 2 | 1 | 2 | 3 | 3 | 4 | 4 | 5 | 6 |
| Stabilized Polyisocyanate[1] | Kind | -- | -- | 2503 | 2053 | 2503 | 2503 | 2503 | MS-50 | Ap | $C_T$ |
| | Amount (Parts) | -- | -- | 200 | 100 | 300 | 50 | 500 | 200 | 200 | 200 |
| Structure (mm) | Finished diameter | 0.341 | 0.341 | 0.341 | 0.340 | 0.340 | 0.341 | 0.336 | 0.340 | 0.337 | 0.340 |
| | Conductor diameter | 0.299 | 0.299 | 0.300 | 0.300 | 0.299 | 0.299 | 0.300 | 0.299 | 0.299 | 0.300 |
| | Film thickness | 0.021 | 0.021 | 0.021 | 0.020 | 0.021 | 0.021 | 0.018 | 0.021 | 0.019 | 0.020 |
| Flexibility (winding in own diameter) | | good | good | good | good | good | good | poor | good | poor | good |
| Solderability | 410°C | good | good | good | good | good | poor | good | good | good | poor |
| | 450°C | good | good | good | good | good | poor | good | good | good | poor |
| Glass transition temperature[2] (°C) | | 140 | 160 | 215 | 217 | 210 | 215 | 160 | 225 | 180 | 225 |

Remark   1)   The kinds of the stabilized polyisocyanates are abbreviated as follows:

2503: Coronate 2503,   MS-50: Millionate MS-50

Ap:   Desmodur Ap Stable

$C_T$:   Desmodur CT Stable

Blending (parts) is amount for 100 parts by weight of the polyamide-imide resin.

2)   The glass transition temperature is a temperature of transition center measured by DSC (DSC-10 made by Seiko Electronics Co., Ltd.)

## Table 2

| | | Comparative example | | Example | |
|---|---|---|---|---|---|
| | | 1 | 2 | 5 | 6 |
| Structure (mm) | Finished diameter | 0.341 | 0.341 | 0.344 | 0.340 |
| | Conductor diameter | 0.299 | 0.299 | 0.300 | 0.300 |
| | Film thickness | 0.021 | 0.021 | 0.022 | 0.020 |
| Flexibility | (winding in own diameter) | good at own diameter | good at own diameter | good at own diameter | good at own diameter |
| Adherence flexibility (20% rapid elongation) | | good at own diameter | good at own diameter | good at own diameter | good at own diameter |
| Unidirectional wear | | 650 g | 680 g | 700 g | 670 g |
| Dielectric breakdown voltage, | Normal state | 9.3 kV | 9.0 kV | 8.5 kV | 7.8 kV |
| | 220°C, 7 days | 3.0 kV | 5.3 kV | 7.1 kV | 6.7 kV |
| | 240°C, 7 days | less than 0.5 kV | 0.6 kV | 5.6 kV | 5.1 kV |
| Heat shock, 200°C | | good at 5-times diameter | good at 3-times diameter | good at own diameter | good at own diameter |
| Heat softening temperature | | 220°C | 230°C | 245°C | 240°C |
| Solderability, 410°C | | 1 sec | 1 sec | 3 sec | 2 sec |
| Glass transition temperature | (DSC method) | 140°C | 160°C | 230°C | 220°C |

Remark   1)   The above tests were conducted according to JIS C 3003 for coil test.

2)   The glass transition temperatures were measured in the same manner as in Table 1.

## Table 3

| Example No. | | 5 | 7 | 8 | 9 | 10 | 11 | 12 |
|---|---|---|---|---|---|---|---|---|
| Added resin | | none | Epicoat #828 | TEPIC | PR-311 | J-820 | Kelimide 600A | B25AS11 |
| Structure (mm) | Finished diameter | 0.344 | 0.342 | 0.343 | 0.340 | 0.341 | 0.342 | 0.340 |
| | Conductor diameter | 0.300 | 0.300 | 0.300 | 0.300 | 0.301 | 0.301 | 0.301 |
| | Film thickness | 0.022 | 0.021 | 0.022 | 0.020 | 0.020 | 0.021 | 0.020 |
| Flexibility (winding in own diameter) | | good | good | good | good | good | good | good |
| Unidirectional wear | | 700 g | 750 g | 720 g | 710 g | 680 g | 720 g | 710 g |
| Dielectric breakdown voltage | | 8.5 kV | 8.7 kV | 8.5 kV | 8.9 kV | 8.0 kV | 8.7 kV | 8.6 kV |
| Heat shock, 200°C (wound in own diameter) | | good | good | good | good | good | good | good |
| Heat softening temperature | | 245°C | 250°C | 255°C | 260°C | 240°C | 255°C | 245°C |
| Solderability, 410°C | | 3 sec | 4 sec | 3 sec | 10 sec | 3 sec | 8 sec | 1 sec |
| Glass transition temperature | | 230°C | 235°C | 230°C | 235°C | 230°C | 235°C | 230°C |
| Resistance to crazing (Pinholes at elongation in water) | | about 10 | 1 - 2 | 2 - 3 | about 10 | about 10 | about 15 | none |

Remark  1)  Resistance to crazing was tested by dipping a sample 1 meter in length, and pinholes were observed by stretching by 3%.

2)  Other tests were conducted in the same manner as in Table 1 and Table 2.

EP 0 365 877 B1

Reference examples 3 to 7:

Polyamideimides were prepared by use of the same starting material as in Reference Example 1, and varying the reaction temperature and the reaction time. The polyamideimides had reduced specific viscosity of 0.07 (Reference Example 3), 0.13 (Reference Example 4), 0.31 (Reference Example 5), 0.85 (Reference Example 6), and 1.15 (Reference Example 7), respectively.

Example 13:

An insulating lacquer was prepared by mixing and dissolving 100 parts by weight of the resin content of the polyamide-imide insulating lacquer of Reference Example 1 with 200 parts by weight of Coronate 2503, and 1 part by weight of dibutyltin laurate. The resulting insulating lacquer was applied to a copper conductive wire having a diameter of 0.3 mm so as to give a film thickness of 0.020 mm, and subjected to baking. The result of the evaluation of the insulated wire are shown in Table 4.

Comparative example 7:

An insulated wire was prepared and the characteristics thereof were evaluated in the same manner as in Example 13 except that the polyamideimide insulating lacquer used was that prepared in Reference Example 3. The evaluation results are shown in Table 4.

Examples 14 to 16:

An insulated wire was prepared and the characteristics thereof were evaluated in the same manner as in Example 13 except that the polyamide-imide insulating lacquers used were those prepared in Reference Example 4 (for Example 14), Reference Example 5 (for Example 15), Reference Example 6 (for Example 16), respectively. The evaluation results are shown in Table 4.

Comparative Example 8:

Preparation of an insulated wire was attempted in the same manner as in Example 13, except that the polyamideimide insulating lacquer prepared in Reference Example 7 was used. However, insulated wire could not be obtained because of generation of many foams in the film and break of the conductive wire.

Table 4

| | Comparative example | Example | | | |
|---|---|---|---|---|---|
| | 7 | 14 | 15 | 13 | 16 |
| Molecular weight of polyamide-imide resin (reduced specific viscosity) | 0.07 | 0.13 | 0.31 | 0.51 | 0.85 |
| External appearance of insulated wire | good | good | good | good | wavy surface |
| Structure (mm) Finished diameter | 0.340 | 0.342 | 0.341 | 0.342 | 0.344 |
| Conductor diameter | 0.301 | 0.301 | 0.301 | 0.300 | 0.301 |
| Film thickness | 0.020 | 0.021 | 0.020 | 0.021 | 0.022 |
| Flexibility | good at twice diameter | good at own diameter | good at own diameter | good at own diameter | good at own diameter |
| Adherence flexibility (20% rapid elongation) | good at 4-times diameter | good at twice diameter | good at own diameter | good at own diameter | good at own diameter |
| Unidirectional wear | 620 g | 650 g | 700 g | 670 g | 660 g |
| Dielectric breakdown voltage | | | | | |
| Normal state | 7.2 kV | 8.1 kV | 8.8 kV | 8.5 kV | 8.6 kV |
| 240°C, 7 days | 4.3 kV | 5.2 kV | 6.1 kV | 6.2 kV | 5.8 kV |
| Heat shock, 200°C | good at 3-times diameter | good at twice diameter | good at own diameter | good at own diameter | good at own diameter |
| Heat softening temperature | 220°C | 235°C | 245°C | 245°C | 245°C |
| Solderability, 410°C | 2 sec | 2 sec | 2 sec | 4 sec | 5 sec |
| Glass transition temperature | 220°C | 225°C | 229°C | 227°C | 230°C |

Remark  1)  The above tests were conducted according to JIS C 3003 for coil test.

2)  The glass transition temperature is a temperature of transition center measured by DSC-10 made by Seiko Electronics Co., Ltd.)

EP 0 365 877 B1

As described above, the insulated film of the present invention has a higher glass transition temperature and improved thermal resistance in comparison with conventional insulated wires.

The insulated wire of the present invention is as solderable as conventional polyurethane-insulated wires, so that the present invention is of great industrial value.

## Claims

1. An insulated wire comprising a conductor coated and baked thereon with an insulating lacquer, the insulating lacquer comprising (a) 100 parts by weight of a polyamideimide resin having a molecular weight corresponding to a reduced specific viscosity of from 0.1 to 1.0 measured at a concentration of the polyamideimide resin of 0.5 g in 100 ml dimethylacetamide or N-methyl-2-pyrrolidone as the solvent, at a temperature of 30°C, and (b) 75 to 400 parts by weight of a blocked polyisocyanate compound derived from diphenylmethane-diisocyanate.

2. An insulated wire as claimed in claim 1, wherein the polyamideimide resin is a compound derived from a reaction of an aromatic tricarboxylic anhydride or a derivative thereof with an aromatic diisocyanate.

3. An insulated wire as claimed in claim 1 or 2, wherein the blocked polyisocyanate compound is derived by blocking the isocyanate group of diphenylmethanediisocyanate.

4. An insulated wire as claimed in claim 1 or 2, wherein the blocked polyisocyanate compound is derived by blocking the polyisocyanate derived from a polyol and diphenylmethanediisocyanate.

5. An insulated wire as claimed in claim 1 or 2, wherein the insulating lacquer further comprises an expoxy resin.

6. An insulated wire as claimed in claim 5, wherein the epoxy resin is a brominated phenoxy resin.

7. An insulated wire as claimed in any of claims 1 to 4, wherein the polyamideimide resin has a molecular weight corresponding to a reduced specific viscosity of 0.2 to 0.5.

8. An insulated wire as claimed in claim 1, wherein the polyamideimide resin has a molecular weight corresponding to a reduced specific viscosity of 0.3.

## Patentansprüche

1. Isolierter Draht, der einen Leiter umfasst, der mit einem Isolierlack überzogen und dann erhitzt wurde, wobei der Isolierlack (a) 100 Gewichtsteile eines Polyamidimid-Harzes mit einem Molekulargewicht, das einer reduzierten spezifischen Viskosität von 0,1 bis 1,0 entspricht (Messung bei einer Konzentration von 0,5 g in 100 ml Lösungsmittel, - Dimethylacetamid oder N-Methyl-2-pyrrolidon -, und bei einer Temperatur von 30°C), und (b) 75 bis 400 Gewichtsteile einer geblockten Polyisocyanat-Verbindung (erhalten aus Diphenylmethan-diisocyanat) umfasst.

2. Isolierter Draht nach Anspruch 1, wobei das Polyamidimid-Harz eine durch Reaktion eines aromatischen Tricarbonsäure-anhydrides oder eines Derivates desselben mit einem aromatischen Diisocyanat entstandene Verbindung ist.

3. Isolierter Draht nach Anspruch 1 oder 2, wobei die geblockte Polyisocyanat-Verbindung eine Verbindung ist, die durch Blockung der Isocyanat-Gruppe des Diphenylmethan-diisocyanates erhalten wurde.

4. Isolierter Draht nach Anspruch 1 oder 2, wobei die geblockte Polyisocyanat-Verbindung durch Blockung der Polyisocyanat-Verbindung, erhalten aus einem Polyol und Diphenylmethan-diisocyanat, erhalten wurde.

5. Isolierter Draht nach Anspruch 1 oder 2, wobei der Isolierlack außerdem ein Epoxy-Harz umfasst.

6. Isolierter Draht nach Anspruch 5, wobei das Epoxy-Harz ein bromiertes Phenoxy-Harz ist.

7. Isolierter Draht nach einem der Ansprüche 1 bis 4, wobei das Polyamidimid-Harz ein Molekulargewicht besitzt, das einer reduzierten spezifischen Viskosität von 0,2 bis 0,5 entspricht.

8. Isolierter Draht nach Anspruch 1, wobei das Polyamidimid-Harz ein Molekulargewicht besitzt, das einer reduzierten spezifischen Viskosität von 0,3 entspricht.


**Revendications**

1. Fil isolé comprenant un conducteur revêtu d'une laque isolante cuite sur le conducteur, la laque isolante contenant (a) 100 parties en poids d'une résine de polyamidimide ayant une masse moléculaire correspondant à une viscosité spécifique réduite d'une valeur comprise entre 0,1 et 1,0, mesurée à une concentration de la résine de polyamidimide de 0,5 g dans 100 cm³ de diméthylacétamide ou de N-méthyl-2-pyrrolidone constituant un solvant, à une température de 30 °C et (b) 75 à 400 parties en poids d'un composé de polyisocyanate bloqué dérivé de diisocyanate de diphénylméthane.

2. Fil isolé selon la revendication 1, dans lequel la résine de polyamidimide est un composé dérivé d'une réaction d'un anhydride tricarboxylique aromatique ou d'un de ses dérivés avec un diisocyanate aromatique.

3. Fil isolé selon la revendication 1 ou 2, dans lequel le composé de polyisocyanate bloqué est dérivé par blocage du groupe isocyanate de diisocyanate de diphénylméthane.

4. Fil isolé selon la revendication 1 ou 2, dans lequel le composé de polyisocyanate bloqué est dérivé par blocage du polyisocyanate dérivé d'un polyol et de diisocyanate de diphénylméthane.

5. Fil isolé selon la revendication 1 ou 2, dans lequel la laque isolante contient en outre une résine époxyde.

6. Fil isolé selon la revendication 5, dans lequel la résine époxyde est une résine phénoxy bromée.

7. Fil isolé selon l'une quelconque des revendications 1 à 4, dans lequel la résine de polyamidimide a une masse moléculaire correspondant à une viscosité spécifique réduite comprise entre 0,2 et 0,5.

8. Fil isolé selon la revendication 1, dans lequel la résine de polyimide a une masse moléculaire correspondant à une viscosité spécifique réduite de 0,3.